Europäisches Patentamt

European Patent Office

Office européen des brevets

(19)

(11) Veröffentlichungsnummer: **0 068 441**
**B1**

(12) **EUROPÄISCHE PATENTSCHRIFT**

(45) Veröffentlichungstag der Patentschrift: **27.05.87**

(21) Anmeldenummer: **82105547.2**

(22) Anmeldetag: **24.06.82**

(51) Int. Cl.⁴: **G 01 N 23/222**

(54) **Vorrichtung zur Analyse von Mineralsubstanzen unter Verwendung des Verfahrens der Neutronenaktivierungsanalyse.**

(30) Priorität: **25.06.81 HU 186581**

(43) Veröffentlichungstag der Anmeldung:
**05.01.83 Patentblatt 83/01**

(45) Bekanntmachung des Hinweises auf die
Patenterteilung:
**27.05.87 Patentblatt 87/22**

(84) Benannte Vertragsstaaten:
**AT BE CH DE FR GB IT LI LU NL SE**

(58) Entgegenhaltungen:
**EP-A-0 024 835**
**DD-A- 82 225**
**DE-A-2 511 003**
**HU-B- 154 359**
**US-A-4 045 676**

(73) Patentinhaber: **Magyar Allami Eötvös Loránd**
**Geofizikai Intezet**
**Columbus u. 17-23**
**H-1145 Budapest (HU)**

(72) Erfinder: **Renner, János, Dipl.-Phys.**
**Gyarmat u. 33/a**
**Budapest (HU)**
Erfinder: **Siklos, Albert**
**Alma utca 10/a**
**Budapest (HU)**

(74) Vertreter: **Lehn, Werner, Dipl.-Ing. et al**
**Hoffmann, Eitle & Partner Patentanwälte**
**Arabellastrasse 4 (Sternhaus)**
**D-8000 München 81 (DE)**

Courier Press, Leamington Spa, England.

**Beschreibung**

Die Erfindung betrifft eine geophysikalische nukleare analytische Vorrichtung, insbesondere zur Analyse von Mineral-substanzen, die eine den einen Teil der aus dem zu prüfenden Material entnommenen Probe mit schnellen Neutronen, und den anderen Teil mit langsamen Neutronen bestrahlende Aktivierungseinheit und eine diese Aktivierungseinheit mit einer Probenzuführeinheit und mit einer Hochenergie-Meßstelle verbindende pneumatische Probentransporteinrichtung aufweist.

Eine solche geophysikalische analytische Vorrichtung ist aus der HU—PS 154359 bekannt. Diese offenbart zur Analyse von Mineralsubstanzen eine Aktivierungseinheit sowie eine diese Aktivierungseinheit mit einer Probenzuführeinheit und mit einer Hochenergie-Meßstelle verbindende pneumatische Probentransporteinrichtung. Die Aktivierungseinheit bestrahlt den einen Teil einer Probe mit schnellen Neutronen und den anderen Teil der Probe mit langsamen Neutronen. Diese bekannte geophysikalische nukleare analytische Vorrichtung weist den Nachteil auf, daß sie grundsätzlich nur den Aluminium- und Silicium-Gehalt von Mineralsubstanzen bestimmen kann.

Aus der DE—AS 25 11 003 ist ein System zur automatischen Ermittlung der von technologischen Parametern abhängigen Materialbeiwerten bekannt. Dieses System enthält einen Rechner und mindestens eine mit diesem Rechner in Wechselverbindung stehende Einrichtung. Diese DE—AS 25 11 003 zeigt keinen Lösungsweg, in welcher Weise sowohl der Aluminium- und der Silicium-Gehalt von zu untersuchenden Problem als auch weitere Elemente bestimmt werden können.

Aus der US—PS 4 045 676 ist eine Vorrichtung zur Bestimmung der Elementenkonzentration in Proben bekannt. Dieses Gerät dient insbesondere zur Konzentrationsfeststellung eines Schwermetalles in einem Probenverband, wie z.B. einem Felsen. Hierbei werden Röntgen- oder Gamma-Strahlen eingesetzt. Auch diese bekannte Vorrichtung ist nicht geeignet, um neben dem Aluminium- und Silicium-Gehalt einer Probe weitere Elemente festzustellen.

Aus der EP—A—0024835 ist ein Verfahren und eine Vorrichtung zur Analyse der Neutronen-Aktivierung von Proben bekannt. Hierbei wird die Probe mit schnellen Neutronen sowie mit langsamen Neutronen bestrahlt. In Abweichung von den Verfahren, bei denen mit unterschiedlicher Geschwindigkeit der Neutronen bestrahlt wird, wird in dieser bekannten Vorrichtung nur die Wirkung der schnellen Neutronen, welche von einer schnellen Neutronenquelle ausgestrahlt werden, ausgenutzt, um das Probenmaterial zu bestrahlen. Desweiteren ist ein thermaler Neutronendetektor vorgesehen, um den thermalen Neutronenfluß in der bestrahlten Probe zu überwachen.

Hierbei wird ein Gamma-Strahlendetektor eingesetzt, der von der Neutronenquelle abgeschirmt und getrennt ist. Desweiteren wird ein Neutronendetektor verwendet, so daß lediglich nur eine Neutronenquelle mit Hochenergie angewendet wird. Die einzelnen Komponentenanteile werden durch die spektrale Verteilung der Strahlung bestimmt, wobei die Ergebnisse aufgrund der Meßwerte der Neutronenbestimmung korrigiert werden können. Dieses bekannte Verfahren eignet sich lediglich zur Bestimmung von Silicium und Aluminium.

Aus der DD—PS 82225 ist ein Radioisotopen-Röntgenfluoreszenzanalysator zur Elementaranalyse von Gesteinen und Erzen bekannt. Dieser Analysator weist eine Radioisotopenquelle und eine Sekundärstrahlungsdetektoreinheit auf, die mit einem Impulshöhenanalysator zusammenarbeitet. Dieser Impulshöhenanalysator steht mit entsprechenden Schaltungseinheiten eines Meßgerätes in Verbindung. Dieser Analysator gibt keine Anregung, außer den Elementen Silicium und Aluminium noch weitere zusätzliche Elemente zu bestimmen.

Der Erfindung liegt daher die Aufgabe zugrunde, mit einer geophysikalischen nuklearen analytischen Vorrichtung der eingangs genannten Art gleichzeitig mehrere Komponenten der Zwischen- und Endprodukte bestimmen zu können, und zwar sowohl auf dem Gebiet der Rohstofferkundung und Rohstoffgewinnung als auch in der industriellen Verarbeitung, wobei neben den Elementen Aluminium und Silicium noch weitere Elemente bestimmt werden sollen, wie z.B. Kalzium, Titan und Eisen.

Diese Aufgabe wird erfindungsgemäß dadurch gelöst, daß mindestens zwei Niederenergie-Meßstellen vorgesehen sind, die jeweils aus einer an den aus dem zu prüfenden Material entnommenen anderen Proben angeordneten, weiche Gamma-Strahlung erzeugenden Erregerstrahlungseinheit mit jeweils voneinander abweichendem Energiespektrum und aus einer Detektoreinheit sowie aus einem an diesem angeordneten Probenspeicher bestehen, wobei die Detektorausgänge der Hochenergie-Meßstelle und die der Niederenergie-Meßstellen sowie die Steuereingänge der pneumatischen Probentransporteinrichtung und der Probenspeicher an eine zentrale Steuer-, Datenspeicher- und Auswerteeinheit angeschlossen sind.

Eine solche geophysikalische nukleare analytische Vorrichtung, welche gleichzeitige Bestimmung mehrerer Komponenten ermöglicht, läßt sich sowohl in Schiffen für Meereserkundung als auch in Bergwerken sowie in Industriegewinnungsbetrieben einesetzen einschließlich bei der stetigen Regelung und Steuerung für die Gewinnung und Verarbeitung von Elementen. Hierbei tritt eine kombinatorische Wirkung auf. Es kann zusätzlich zur Aktivierungseinheit, welche die entnommene Probe einerseits mit schnellen Neutronen und andererseits mit langsamen Neutronen bestrahlt, eine Niederenergie-Meßstelle verwendet werden, welche aus mindestens zwei Erregerstrahlungseinheiten besteht. Diese erzeugen eine weiche Gamma-Strahlung, und zwar mit voneinander abweichenden Energiespektren. Die zustandekommende charakteristische Röntgenstrahlung wird mittels Detektorpaaren erfaßt. In vorteilhafter Weise können hierbei weitere Elemente wie z.B. Kalzium, Titan und Eisen bestimmt werden. Die Detektorausgänge der genannten Hochenergie-Meßstelle und die Detektorausgänge der genannten Niederenergie-Meßstelle arbeiten mit einer Auswerteschaltung zusammen. In dieser werden entsprechende Daten gespeichert (Musterspeichereinheiten). Die Steuereingänge der pneumatischen Probentransporteinrichtung und der Probenspeicher sind in vorteilhafter Weise an die zentrale Steuer-, Datenspeicher- und Auswerteeinheit angeschlossen. Zur Vermeidung von Fehlern, die durch die anwesenden ungeprüften Elemente sowie wegen der Rückstrahlung entstehen, sind mindestens zwei Niederenergie-Meßstellen zur Abgabe der weichen Gamma-Strahlung vorgesehen. Hierbei weist das Energiespektrum der Erregerstrahlungseinheit bei einer der Niederenergie-Meßstelle eine dominant niedrigere Energiekomponente auf, als dies bei der Energiekomponente der charakteristischen Energie des zu prüfenden Elementes der Fall ist. Das Energiespektrum der Erregereinheit der anderen Neiderenergie-Meßstelle weist jedoch auch eine höhere Energiekomponente auf. Die Detektoreinheit enthält wenigstens ein vor diesem Detektor angebrachtes mechanisches Filter. Die Bestimmung weiterer Elemente erfolgt innerhalb der Zykluszeit der Neutronen aktivierenden Bestimmung von Aluminium und Silicium. Auf diese Weise wird gleichzeitig die fehlerlose Ermittlung der weiteren Komponenten bzw. Elemente ermöglicht sowie die Bestimmung der Strahlung von ungeprüften Elementen und der durch Fehler entstehenden Rückstrahlung.

Aufgrund der genannten Kombination der Hochenergie-Meßstelle mit mindestens zwei Niederenergie-Meßstellen ergibt sich der unerwartete Effekt, daß nämlich das Meßergebnis einerseits vom geometrischen Fehler des Probenstandes und andererseits von dem Fehler, der sich durch den Zerfall der angewendeten weichen Gamma-Strahlungsquellen in Verbindung mit einer Intensitätsverminderung ergibt, unabhängig wird. Aufgrund dessen erhält man ein direktes Ergebnis, z.B. in Gewichtsprozenten, das unmittelbar zu Steuerung des Prozesses für die Analyse sowie für die Förderung und Verarbeitung angewendet werden kann. Durch die vorgenannte Kombination ergibt sich der weitere Vorteil, daß die störenden Einwirkungen der nicht zu prüfenden Elemente ausgesiebt werden. Dies bedeutet, daß die Strahlung dieser nicht zu prüfenden Elemente vermindert wenn nicht gar eliminiert wird.

Weitere Ausgestaltungen der Erfindung finden sich in der abhängigen Ansprüchen. So liegen z.B. die Achsenlinien der Strahlungsquellen der Erregerstrahlungseinheit in der normalen zur Oberfläche der zu prüfenden Proben. Die Mittellinie der zur Erfassung dienenden Transistoren bildet eine Kegelfläche. Diese Detektoren sind in einer zu je einer Erregerstrahlungseinheit gehörenden Detektoreinheit enthalten. Die Achse der Kegelfläche stimmt mit der Achsenlinie der Strahlungsquelle der zur Detektoreinheit gehörenden Erregerstrahlungseinheit überein.

Gemäß weiterer Ausgestaltung hat die Vorrichtung mindestens eine Detektoreinheit, welche ein vor dem Detektor angeordnetes mechanisches Filter aufweist.

Gemäß weiterer Ausbildung weist die Vorrichtung eine mit einem Meßdetektor, mit einer einen Basisdetektor enthaltenden Detektoreinheit und mit einer eine Strahlungsquelle enthaltenden Erregerstrahlungseinheit ausgerüstete Niederenergie-Meßstelle auf.

Die Fehler, die durch den Zerfall in den Energieeinheiten der Niederenergie-Meßstellen vorhandenen Strahlungsquellen verursacht werden, können beseitigt werden, wenn ein mit seinem Eingang an dem Basisdetektor der Detektoreinheit angeschlossener voreingestellter Datenspeicher die Meßzeit gegenüber der Probe bzw. den anderen Proben bestimmt.

In vorteilhafter Weise wird als zentrale Steuer-, Datenspeicher- und Auswerteeinheit der erfindungsgemäßen Vorrichtung eine Rechenmaschine verwendet.

Im folgenden ist die Erfindung an Hand eines in den Zeichnungen dargestellten Ausführungsbeispiels näher erläutert. In der Zeichnung zeigen

Fig. 1 das Blockschema einer vorteilhaften Ausführungsform der erfindungsgemäßen Vorrichtung, und

Fig. 2 den geometrischen Aufbau der Niederenergie-Meßstelle.

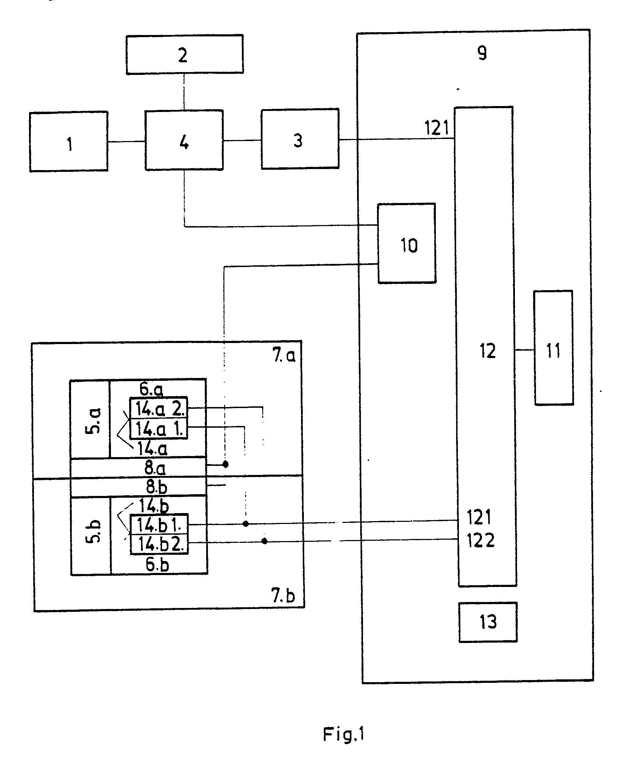

Wie aus Fig. 1 ersichtlich ist, werden durch eine Probe-transporteinrichtung 4 an eine Aktivierungseinheit 1 eine Probenzuführeinheit 2 und eine Hochenergie-Mustermeßstelle 3 angeschlossen. Die Detektorausgänge der Hochenergie-Meßstelle 3 sind mit Meßeingängen 12.1 einer in einer zentralen Steuer-, Datenspeicher- und Auswerte-Einheit 9 angeordneten gesteuerten und/oder geregelten Datenspeichereinheit 12 verbunden. Der Steuereingang der Probetransporteinrichtung 4 ist an den einen Ausgang eines an der zentralen Steuer-, Datenspeicher- und Auswerte-Einheit 9 angeordneten Probenbewegungsmechanismus 10 angeschlossen.

Die Vorrichtung hat zwei Niederenergie-Meßstellen 7a, 7b. In jeder Niederenergie-Meßstelle 7a. bzw. 7b befinden sich eine Erregerstrahlungseinheit 5.a bzw. 5.b, ein Probenspeicher 8a bzw. 8b und eine Detektoreinheit 6.a bzw. 6.b, wobei das Energiespektrum der Erregerstrahlungseinheit 5.a Komponenten mit dominant niedrigeren Energien als die Energie der charakteristischen Röntgenstrahlung des zu prüfenden Elements aufweist, während das Energiespektrum der Erregereinheit 5.b jedoch auch Komponenten von höheren Energien enthält. Die Eingänge der Probenspeicher 8.a und 8.b sind an den anderen Ausgang des Probenbewegungsmechanismus 10 angeschlossen. Die Detektoreinheiten 6.a und 6.b enthalten Detektoren 14.1, 14.b. Die Ausgänge der Meßdetektoren 14.a 1 und 14.b 2 sind an Meßeingänge 121 der gesteuerten und/oder geregelten Datenspeichereinheit und die Ausgänge von Basisdetektoren 14.a 2 und 14.b 2 an die Eingänge 122 der gesteuerten und/oder geregelten Einheit angeschlossen. In der zentralen Steuer-, Datenspeicher- und Auswerte-Einheit 9 sind ein Zeitregler 13 und eine Gewichtsprozente bestimmende Einheit 11 vorhanden, wobei die letztere mit ihrem Eingang mit dem Ausgang der gesteuerten und/oder geregelten datenspeichernden Einheit 12 verbunden ist.

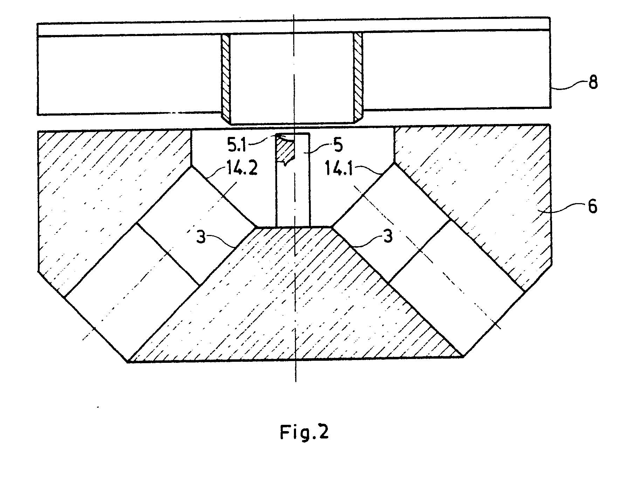

In der Detektoreinheit 6 der Niederenergie-Meßstelle 7 deren geometrischer aufbau in Fig. 2 beispielsweise dargestellt ist, sind Detektoren 14, zweckmäßig Zählrohrfenster (GM-Zähler) angeordnet. Die Mittellinien der Erfassungsrichtung der Detektoren 14 bilden eine solche Kegelfäche, deren Spitze sich auf der Oberfläche der Probe befindet und deren Achsenlinie senkrecht zur Probenoberfläche steht. In der Achsenlinie dieses Kegels sind die Erregerstrahlungseinheit 5 und auch deren Strahlungsquellenhalter 5.1 untergebracht, wodurch die Achsenlinie der Strahlungsquelle mit der Achsenlinie der Kegelfläche übereinstimmt. Gegenüber der Detektoreinheit 6 ist der Probenspeicher 8 so angeordnet, daß die zu messende Musteroberfläche auf dem Gipfelpunkt der Kegelfläche zu dessen Achsenlinie senkrecht angeordnet ist. Unter den symmetrisch angeordneten Detektoren 14 bildet einer einen Meßdetektor 14.1, während der andere einen Basisdetektor 14.2 bildet.

Die Vorrichtung arbeitet zyklisch. Die Zyklen werden von dem Zeitregler 13 gesteuert. Der Funktionsablauf für den Weg der zu messenden Muster ist wie folgt: Von den aus dem zu prüfenden Material entnommenen zwei Probenpaaren kommen zwei Teile des einen Probenpaars aus der Probenzuführungseinheit 2 unter Einwirkung eines Befehlssignals des Probenbewegungsmechanismus 10 durch die Probentransporteinrichtung 4 in die Aktivierungseinheit 1. Hier wird durch Einwickung des Flusses der langsamen Neutronen der eine Teil und durch Einwirkung des Flusses der schnellen Neutronen der andere Teil des Probenpaares aktiviert. In dem darauffolgenden Takt des Probenbewegungsmechanismus 10 kommt das Probenpaar aus der Aktivierungseinheit 1 durch die Probentransporteinrichtung 4 in die Hochenergie-Meßstelle 3. Auf gleiche Weise und zur selben Zeit kommt ein aus zwei Probenpaaren entstehenden neues Probenpaar aus der Probenzuführeinheit 2 in die Aktivierungseinheit 1. Bei den in der Hochenergie-Meßstelle 3 befindenden aktivierten Proben wird durch ·die nuklearen Detektoren der Hochenergie-Meßstelle 3. eine Strahlenwirkung beobachtet oder festgestellt, durch die impulse entstehen, die die gesteuerte und/oder geregelte Datenspeichereinheit 12 betreiben. Der Zeitregler 13 bestimmt auch die Meßzeit.

Am Ende des Meßzyklus entfernt sich das Probenpaar aus der Hochenergie-Meßstelle. Der Zyklus wiederholt sich wie oben beschrieben mit einem neuen Probenpaar.

Gleichzeitig mit der Weiterleitung des einen Paars vor den aus dem zu prüfenden Material entnommenen zwei Probenpaaren in die Hochenergie-Meßstelle 3 werden die in den musterliefernden Einheiten 8.a und 8.b lagernden Teile des anderen Paares in Niederenergie-Meßstellen 7.a und 7.b gemessen. Das gleichzeitige Messen weder der Probenpaare zwischeneinander, noch zwischen den Teilen der einzelnen Paare bildet keine Voraussetzung für die Verwicklichung der Erfindung. Das dargestellte Beispiel verhilft nur zu einer einfacheren Übersicht.

Während der Messung in den Niederenergie-Meßstellen 7.a, 7.b wird der eine Teil des Probenpaares von der Erregerstrahlungseinheit 5.a mit solch einer weichen Gamma-Strahlung bestrahlt, deren Spektrum dominantere, niedrigere Komponenten aufweist, als die der charakteristischen Strahlenenergie der geprüften Komponente. So erregt sie die zu prüfenden Komponenten nicht oder nur in kleinem Maße. Der andere Teil des Musterpaares wird durch die Erregerstrahlungseinheit 5.b solch einer weichen Gamma-Strahlung ausgesetzt, deren Spektrum auch höhere, zweckmäßig nahestehende Energiekomponenten aufweist, als bei der charakteristischen Strahlenergie der geprüften Komponente. Unter den in den Detektoreinheiten 6.a, 6.b an den Niederenergie-Meßstellen 7.a, 7.b angeordneten Detektoren 14.a, 14.b erfassen die Meßdetektoren 14.a 1, 14.b 1 die aus den Mustern unter Einwirkung der Erregung austretende Strahlung. Die Atome der Proben erzeugen diese Strahlung deshalb, weil unter Einwirkung der Erregung die aus den K-Schalen ausgestoßenen Elektronen durch die aus den L-Schalen ersetzt werden. Die erfaßte Strahlung wird in Form von Impulsen durch die Meßeingänge 121 in dem gesteuerten und/oder geregelten Datenspeicher 12 gespeichert. Der Zeitregler 13 setzt die Messung in Gang. Ihre Beendigung jedoch regeln bzw. steuern—von dem steuernden und/oder regelnden Eingang 122 der gesteuerten und/oder geregelten Datenspeichereinheit 12—die sich in den Detektoreinheiten 6.a, 6.b befindenden, durch die Basisdetektoren 14.1.2, 14.b.2 erfaßten Impulse.

Nach Beendigung der Messung gelangen die aus den in der gesteuerten und/oder geregelten Datenspeichereinheit 12 gespeicherten und aus den Hochenergie-Meßstellen 3 und Niederenergie-Meßstellen 7 stammenden Meßdaten in die die Gewichtsprozente bestimmende Einheit 11, wo das erwünschte Ergebnis aufgrund der bekannten mathematischen Zusammenhänge mit arithmetischen Schritten bestimmt, ausgeschrieben und eventuell gespeichert wird.

Es ist ersichtlich, daß die als Beispiel angeführte Ausführung die Zielsetzung der Erfindung mit sehr einfachen Mitteln und auf einfache Art verwirklicht und keine hohen Ansprüche im Betrieb stellt, so daß sie bei den bezeichneten industriellen Aufgaben vorteilhaft angewendet werden kann.

## Patentansprüche

1. Geophysikalische nukleare analytische Vorrichtung, insbesondere zur Analyse von Mineralsubstanzen, die eine den einen Teil der aus dem zu prüfenden Material entnommenen Probe mit schnellen Neutronen, und den anderen Teil mit langsamen Neutronen bestrahlende Aktivierungseinheit (1) und eine diese Aktivierungseinheit (1) mit einer Probenzuführeinheit (2) und mit einer Hochenergie-Meßstelle (3) verbindende pneumatische Probentransporteinrichtung (4) aufweist, dadurch gekennzeichnet, daß mindestens zwei Niederenergie-Meßstellen (7a, 7b) vorgesehen sind, die jeweils aus einer an den aus dem zu prüfenden Material entnommenen anderen Proben angeordneten, weiche Gammastrahlung erzeugenden Erregerstrahlungseinheit (5a bzw. 5b) mit jeweils voneinander abweichendem Energiespektrum und aus einer Detektoreinheit (6a bzw. 6b) sowie aus einem an diesen Einheiten (5, 6) angeordneten Probenspeicher (8a bzw. 8b) bestehen, wobei die Detektorausgänge der Hochenergie-Meßstelle und die der Niederenergie-Meßstellen (7a, 7b) sowie die Steuereingänge der pneumatischen Probentransporteinrichtung (4) und der Probenspeicher (8) an eine zentrale Steuer-Datenspeicher- und Auswerteeinheit (9) angeschlossen sind.

2. Vorrichtung nach Anspruch 1, dadurch gekennzeichnet, daß wenigstens eine der Niederenergie-Meßstellen (7a, 7b) eine dominantere, niedrigere Energie enthaltende Erregerstrahlungseinheit (5a) hat als die charakteristische Strahlenenergie des zu prüfenden Elements, und wenigstens eine weitere Meßstelle mit einer Erregerstrahlungseinheit (5b) versehen ist, deren Energie höhere Komponenten enthält als die charakteristische Energie der Strahlung des zu prüfenden Elements.

3. Vorrichtung nach Anspruch 1 oder 2, dadurch gekennzeichnet, daß die Achsenlinien der Strahlungsquellen der Erregerstrahlungseinheit (5) in der Normalen zur Oberfläche der zu prüfenden Proben liegen, und die Mittellinie der zur Erfassung dienenden Detektoren (14), die in einer zu je einer Erregerstrahlungseinheit (5) gehörenden Detektoreinheit (6) enthalten sind, eine Kegelfläche bildet, wobei die Achse der Kegelfläche mit der Achsenlinie der Strahlungsquelle der zur Detektoreinheit (6) gehörenden Erregerstrahlungseinheit (5) übereinstimmt.

4. Vorrichtung nach einem der Ansprüche 1 bis 3, dadurch gekennzeichnet, daß die Detektoreinheit (6) ein vor dem Detektor (14) angeordnetes mechanisches Filter aufweist.

5. Vorrichtung nach einem der Ansprüche 1 bis 4, dadurch gekennzeichnet, daß sie eine Niederenergie-Meßstelle (7) aufweist, die mit einem Meßdetektor (14.1), mit einem Basisdetektor (14.2), der in der Detektoreinheit (6) enthalten ist, und mit einer Strahlungsquelle ausgerüstet ist, die in einer Erregerstrahlungseinheit (5) enthalten ist.

6. Vorrichtung nach einem der Ansprüche 1 bis 5, dadurch gekennzeichnet, daß in der zentralen Steuer-, Datenspeicher- und Auswerteeinheit (9) eine gesteuerte und/oder geregelte Datenspeichereinheit (12), deren Ausgänge an eine Gewichtsprozente bestimmende Einheit (11) und deren Meßeingänge (121) an die Detektorausgänge der Hochenergie-Meßstelle (3) und der Niederenergie-Meßstelle (7) angeschlossen sind, ein Zeitregler (13) und ein Probenbewegungsmechanismus (10) vorgesehen sind, dessen Ausgänge an die Steuereingänge der pneumatischen Probentransporteinrichtung (4) und an die des Probenspeichers (8) angeschlossen sind.

7. Vorrichtung nach einem der Ansprüche 1 bis 6, dadurch gekennzeichnet, daß sie in der Detektoreinheit (6), wenigstens einen, mit seinem Ausgang an den steuernden und/oder regelnden Eingang (122) des geregelten und/oder gesteuerten Datenspeichers (12) angeschlossenen Basisdetektor (14.2) aufweist.

8. Vorrichtung nach einem der Ansprüche 1 bis 6, dadurch gekennzeichnet, daß die zentrale Steuer-, Datenspeicher- und Auswerteeinheit (9) als Rechenmaschine ausgebildet ist.

## Revendications

1. Dispositif d'analyse géophysique nucléaire, en particulier pour l'analyse de substances minérales, comportant une unité d'activation (1) irradiant une partie de l'échantillon prélevé sur le matériau à analyser avec des neutrons rapides et l'autre partie avec des neutrons lents et un dispositif de transport pneumatique d'échantillons (4) reliant l'unité d'activation (1) à un dispositif d'alimentation d'échantillons (2) et à un poste de mesure à haute énergie (3), caractérisé en ce qu'au moins deux postes de mesure à faible énergie (7a, 7b) sont prévus, qui se composent chacun d'une unité de rayonnement d'excitation (5a ou 5b) avec des spectres d'énergie différents l'un de l'autre, produisant un rayonnement gamma faible et disposée sur l'autre échantillon pris sur le matériau à analyser et d'une unité de détection (6a ou 6b) ainsi que d'un stockeur d'échantillons (8a ou 8b) disposé sur ces unités (5, 6) et en ce que les sorties de détection du poste de mesure à haute énergie (3) et des postes de mesure à faible énergie (7a, 7b) et les sorties de commande du dispositif pneumatique de transport d'échantillons (4) et du stockeur d'échantillons (8) sont reliées à une unité centrale (9) de commande, de stockage des données et d'identification.

2. Dispositif selon la revendication 1, caractérisé en ce qu'au moins l'un des postes de mesure à faible énergie (7a, 7b), comporte une unité de rayonnement d'excitation (5a) contenant une énergie plus dominante et plus faible que l'énergie de rayonnement caractéristique de l'élément à analyser et au moins un autre poste de mesure équipé d'une unité de rayonnement d'excitation (5b) dont l'énergie comporte des composantes plus élevées que l'énergie caractéristique du rayonnement de l'élément à tester.

3. Dispositif selon la revendication 1 ou 2, caractérisé en ce que les lignes d'axe des sources de rayonnement de l'unité de rayonnement d'excitation (5) se trouvent sur les normales à la surface de l'échantillon à tester, en ce que la ligne médiane des détecteurs (14) servant au captage et qui sont contenus dans une unité de détection (6) appartenant à chacune des unités de rayonnement d'excitation (5), forme une surface conique, l'axe de la surface conique correspondant à la ligne d'axe de la source de rayonnement de l'unité de rayonnement d'excitation (5) appartenant à l'unité de détection (6).

4. Dispositif selon l'une des revendications 1 à 3, caractérisé en ce que l'unité de détection (6) comporte un filtre mécanique disposé avant le détecteur (14).

5. Dispositif selon l'une des revendications 1 à 4, caractérisé en ce qu'il comporte un poste de mesure à faible énergie (7) qui est équipé d'un détecteur de mesure (14.1) et d'un détecteur de base (14.2) contenu dans l'unité de détection (6) et d'une source de rayonnement contenue dans une unité de rayonnement d'excitation (5).

6. Dispositif selon l'une des revendications 1 à 5, caractérisé en ce qu'il comporte dans l'unité centrale (9) de commande, de stockage de données et d'identification, une unité de stockage de données (12) commandée et/ou réglée et dont les sorties sont reliées à une unité (11) déterminant des pourcentages en poids, tandis que ses entrées de mesure (121) sont reliées aux sorties de détection du poste de mesure à haute énergie (3) et du poste de mesure à faible énergie (7), une horloge (13) et un mécanisme de déplacement d'échantillon (10) dont les sorties sont reliées aux entrées de commande du dispositif pneumatique de transport d'échantillon (4) et du stockeur d'échantillon (8).

7. Dispositif selon l'une des revendications 1 à 6, caractérisé en ce qu'il comporte dans l'unité de détection (6), au moins un détecteur de base (14.2) relié par sa sortie à l'entrée (122) de commande et/ou de réglage du stockeur de données (12) réglé et/ou commandé.

8. Dispositif selon l'une des revendications 1 à 6, caractérisé en ce que l'unité centrale (9) de commande, de stockage de données et d'identification est une machine calculatrice.

**Claims**

1. Geophysical nuclear analytical device particularly for the analysis of mineral substances, including an activation unit (1) which irradiates the one part of the sample taken from the material to be tested with fast neutrons and the other part with slow neutrons, and a pneumatic sample transport device (4) connecting this activation unit (1) with a sample delivery unit (2) and with a high energy measuring station (3), characterized in that at least two low energy measuring stations (7a, 7b) are provided, each of which consists of an excitation radiation unit (5a or 5b respectively) for generating soft gamma radiation each with a differing energy spectrum and which are associated with the other samples taken from the material to be tested, and a detector unit (6a or 6b, respectively) as well as a sample store (8a or 8b) which is associated with these units (5, 6), the detector outputs of the high energy measuring station and those of the low energy measuring station (7a, 7b) as well as the control inputs of the pneumatic sample transport device (4) and the sample store (8) being connected to a central control and data storing and evaluating unit (9).

2. Device according to claim 1 characterized in that at least one of the low energy measuring stations (7a, 7b) includes an excitation radiation unit (5a) with a more dominant, lower energy than the characteristic radiation energy of the element to be tested, and at least a further measuring station is provided with an excitation radiation unit (5b), whose energy includes higher components than the characteristic energy of the radiation of the element to be tested.

3. Device according to claims 1 or 2 characterized in that the lines through the axes of the radiation sources of the excitation radiation unit (5) lie along lines normal to the surface of the samples to be tested, and the centre lines of the detectors (14) for detection purposes, which are included in a detector unit (6) belonging to each excitation radiation unit (5), form a conical surface, the axis of the conical surface being the same as the line through the axis of the radiation source of the excitation radiation unit (5) belonging to the detector unit (6).

4. Device according to any one of the claims 1 to 3 characterized in that the detector unit (6) includes a mechanical filter disposed in front of the detector (14).

5. Device according to any one of the claims 1 to 4 characterized in that it includes a low energy measuring station (7), which is equipped with a measuring detector (14.1), with a base detector (14.2) included in the detector unit (6), and with a radiation source included in an excitation radiation unit (5).

6. Device according to any one of the claims 1 to 5 characterized in that in the central control, data storage and evaluation unit (9) there are provided a controlled and/or regulated data storage unit (12), whose outputs are connected to a unit (11) for determining percentages by weight and whose measuring inputs (121) are connected to the detector outputs of the high energy measuring station (3) and of the low energy measuring station (7), a timing regulator (13), and a mechanism (10) for moving the samples, whose outputs are connected to the control inputs of the pneumatic sample transport device (4) and the sample store (8).

7. Device according to any one of the claims 1 to 6 characterized in that it includes in the detector unit (6) at least one base detector (14.2) with its output connected to the controlling and/or regulating input (122) of the regulated and/or controlled data store (12).

8. Device according to any one of the claims 1 to 6 characterized in that the central control, data storage and evaluation unit (9) is a computer.

Fig.1

Fig.2